(19) **Europäisches Patentamt**
**European Patent Office**
**Office européen des brevets**

(11) **EP 4 567 681 A1**

(12) # EUROPEAN PATENT APPLICATION

(43) Date of publication:
**11.06.2025 Bulletin 2025/24**

(51) International Patent Classification (IPC):
**G06N 3/098** (2023.01) **G06N 3/063** (2023.01)
**G06N 3/084** (2023.01)

(21) Application number: **24214756.9**

(22) Date of filing: **22.11.2024**

(52) Cooperative Patent Classification (CPC):
**G06N 3/098; G06N 3/063; G06N 3/084**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.12.2023 FI 20236342**

(71) Applicant: **Nokia Solutions and Networks Oy**
**02610 Espoo (FI)**

(72) Inventors:
• **RAMANAN, Buvaneswari**
  **Scotch Plains - NJ (US)**
• **FRIEDMAN, Brian**
  **Basking Ridge - NJ (US)**
• **KHAN, Manzoor**
  **New Providence - NJ (US)**
• **DRABECK, Lawrence**
  **Oceanport - NJ (US)**

(74) Representative: **Nokia EPO representatives**
**Nokia Technologies Oy**
**Karakaari 7**
**02610 Espoo (FI)**

(54) **SYSTEM AND METHOD FOR HYBRID FEDERATED LEARNING WITH TRUSTED EXECUTION ENVIRONMENT (TEE) CLIENTS AND NON-TEE CLIENTS**

(57) A server for hybrid federated learning with trusted execution environment (TEE) client devices and non-TEE client devices may determine an initial set of global model weights associated with a desired machine learning algorithm, transmit the initial set of global model weights to a plurality of client devices, the plurality of client devices including a plurality of TEE client devices and a plurality of non-TEE client devices, the initial set of global model weights enabling each of the plurality of client devices to generate encoded gradient information based on data collected by each respective client device and pseudo-random noise generated by the respective client device, receive the encoded gradient information from each of the plurality of client devices, and determine an updated set global model weights based on the encoded gradient information.

EP 4 567 681 A1

## Description

### RELATED FIELD

Various example embodiments relate to methods, apparatuses, systems, and/or non-transitory computer readable media for performing hybrid federated machine learning using trusted execution environment (TEE) client devices and non-TEE client devices.

### BACKGROUND

Federated learning (FL) refers to a decentralized method of training a machine learning model directly on edge devices of a machine learning system without exchanging the data sets collected by each edge device with a central server. For example, each of the edge devices generate local data sets and train local machine learning models on the local data sets, and exchange parameters, e.g., gradient information, etc., of the local machine learning models with a central server to generate a global machine learning model. The global machine learning model is iteratively updated through one or more federated learning rounds, wherein the current global model state (e.g., global weights, etc.) is transmitted to each of the edge devices for use in training the local models on the edge devices which then generate local model updates for the global model. The central server receives the local model updates (e.g., local gradient information, etc.) from the edge devices, aggregates and processes the local model updates into a single global update, and applies the global update to the global model to generate an updated global model state. The updated global model state is then transmitted to the edge devices and the learning processes is repeated until a desired training termination condition is achieved.

The FL technique contrasts with traditional centralized machine learning model training techniques wherein the edge devices would collect and transmit data to one or more central servers for training the centralized machine learning model, without performing any local training on the edge devices. The FL technique enables the data collected by the edge devices to be stored on the edge devices themselves, thereby improving data privacy, reducing the amount of data being transmitted over a network, and potentially improving data security in comparison to centralized machine learning model training techniques.

### SUMMARY

At least one example embodiment is related to a server.

In at least one example embodiment, the server may include memory storing computer readable instructions, and processing circuitry configured to execute the computer readable instructions to cause the server to, determine an initial set of global model weights associated with a desired machine learning algorithm, transmit the initial set of global model weights to a plurality of client devices, the plurality of client devices including a plurality of trusted execution environment (TEE) client devices and a plurality of non-TEE client devices, the initial set of global model weights enabling each of the plurality of client devices to generate encoded gradient information based on data collected by each respective client device and pseudo-random noise generated by the respective client device, receive the encoded gradient information from each of the plurality of client devices, and determine an updated set global model weights based on the encoded gradient information.

Some example embodiments provide that the server is further caused to determine a first set of differences in the encoded gradient information received from each of the plurality of TEE client devices, and transmit the first set of differences to a verification server.

Some example embodiments provide that the server is further caused to receive a list of core TEE client devices from the verification server, the list of core TEE client devices selected from the plurality of TEE client devices by the verification server based on the first set of differences, and transmit the first set of differences to a verification server.

Some example embodiments provide that the server is further caused to receive a list of core TEE client devices from the verification server, the list of core TEE client devices selected from the plurality of TEE client devices by the verification server based on the first set of differences, determine a second set of differences in the encoded gradient information received from each of the plurality of non-TEE client devices and each of the core TEE client devices, and transmit the second set of differences to the verification server.

Some example embodiments provide that the server is further caused to receive a list of trusted client devices and average noise information from the verification server, the list of trusted client devices selected from the plurality of TEE client devices and the plurality of non-TEE client devices by the verification server based on the second set of differences, and the average noise information associated with the list of trusted client devices, and determine the updated set of global model weights based on the encoded gradient information corresponding to the client devices included in the list of trusted client devices and the average noise information.

Some example embodiments provide that the server is further caused to determine the updated set of global model weights by, calculating a sum of the encoded gradient information corresponding to the client devices included in the list of trusted client devices, determining average raw gradient information based on the sum of the encoded gradient information and the average noise information, and determining the updated set of global model weights based on the average raw gradient information.

Some example embodiments provide that transmissions to and from the server are encrypted.

At least one example embodiment is related to a client device.

In at least one example embodiment, the client device may include memory storing computer readable instructions, and processing circuitry configured to execute the computer readable instructions to cause the client device to, generate a first set of raw data, receive an initial set of global model weights associated with a desired machine learning algorithm from a first server, generate raw gradient information based on the first set of raw data and the initial set of global model weights, generate encoded gradient information based on the raw gradient information and generated pseudo-random noise, transmit the encoded gradient information to the first server, and receive updated global model weights from the first server in response to the encoded gradient information.

Some example embodiments provide that the client device is further caused to, receive pseudo-random noise parameter information from a second server, and generate the pseudo-random noise based on the pseudo-random noise parameter information.

Some example embodiments provide that the pseudo-random noise parameter information includes at least one of: a seed parameter, a distribution parameter, a mean parameter, a variance parameter, or any combinations thereof.

Some example embodiments provide that the pseudo-random noise parameter information is encrypted by the second server based on a shared encryption key of the client device.

Some example embodiments provide that the client device is further caused to generate the shared encryption key using at least one of Diffie-Hellman protocol, elliptic curve Diffie-Hellman protocol, Hess-Qian-Vanstone protocol, lattice-based key exchange, or any combinations thereof.

Some example embodiments provide that the client device is further caused to, perform stochastic gradient descent on the first set of raw data and the initial set of global model weights to generate the raw gradient information, and add the pseudo-random noise to the raw gradient information to generate the encoded gradient information.

Some example embodiments provide that the client device is further caused to, generate updated raw gradient information based on the set of raw data and the updated set of global model weights, receive new pseudo-random noise parameter information from a second server, generate new pseudo-random noise based on the new pseudo-random noise parameter information, generate updated encoded gradient information based on the updated raw gradient information and the new pseudo-random noise, and transmit the updated encoded gradient information to the first server.

Some example embodiments provide that transmissions to and from the client device are encrypted.

Some example embodiments provide that the client device is a trusted execution environment (TEE) client device.

Some example embodiments provide that the client device is a non-TEE client device.

At least one example embodiment is related to a server.

In at least one example embodiment, the server may include memory storing computer readable instructions, and processing circuitry configured to execute the computer readable instructions to cause the server to, receive a first set of differences in encoded gradient information associated with a plurality of trusted execution environment (TEE) client devices from a first server, determine raw gradient distance between each of the plurality of TEE client devices based on the first set of differences, determine a list of core TEE client devices from the plurality of TEE client devices based on the determined raw gradient distance, the list of core TEE client devices including at least one core TEE client device from the plurality of TEE client devices, and transmit the list of core TEE client devices to the first server.

Some example embodiments provide that the server is further caused to, receive a second set of differences in encoded gradient information associated with each of a plurality of non-TEE client devices and each of the core TEE client devices in response to the transmission of the list of core TEE client devices, determine raw gradient distances between the core TEE client devices included in the list of core TEE client devices and each of the non-TEE client devices, and determine a set of trusted non-TEE client devices from the plurality of non-TEE client devices based on the raw gradient distances associated with each of the plurality of non-TEE client devices and a desired threshold gradient distance.

Some example embodiments provide that the server is further caused to, transmit a list of trusted client devices to a second server, the list of trusted client devices including the plurality of TEE client devices and the set of trusted non-TEE client devices, receive average noise information associated with the list of trusted client devices from the second server, and transmit the list of trusted client devices and the average noise information to the first server.

Some example embodiments provide that the transmission of the list of trusted client devices and the average noise information enables the first server to determine updated set of global model weights based on the encoded gradient information corresponding to the client devices included in the list of trusted client devices and the average noise information.

At least one example embodiment is related to a server.

In at least one example embodiment, the server may include means for determining an initial set of global model weights associated with a desired machine learning algorithm, transmitting the initial set of global model weights to a plurality of client devices, the plurality of client devices including a plurality of trusted execution environment (TEE) client devices and a plurality of non-TEE client devices, the initial set of global model weights enabling each of the plurality of client devices to generate encoded gradient information based on data collected by each respective client device and pseudo-random noise generated by the respective client device, receiving the encoded gradient information from each of the plurality of client devices, and determining an updated set global model weights based on the encoded gradient information.

Some example embodiments provide that the server further includes means for determining a first set of differences in the encoded gradient information received from each of the plurality of TEE client devices, and transmitting the first set of differences to a verification server.

Some example embodiments provide that the server further includes means for receiving a list of core TEE client devices from the verification server, the list of core TEE client devices selected from the plurality of TEE client devices by the verification server based on the first set of differences, and transmitting the first set of differences to a verification server.

Some example embodiments provide that the server further includes means for receiving a list of core TEE client devices from the verification server, the list of core TEE client devices selected from the plurality of TEE client devices by the verification server based on the first set of differences, determining a second set of differences in the encoded gradient information received from each of the plurality of non-TEE client devices and each of the core TEE client devices, and transmitting the second set of differences to the verification server.

Some example embodiments provide that the further includes means for receiving a list of trusted client devices and average noise information from the verification server, the list of trusted client devices selected from the plurality of TEE client devices and the plurality of non-TEE client devices by the verification server based on the second set of differences, and the average noise information associated with the list of trusted client devices, and determining the updated set of global model weights based on the encoded gradient information corresponding to the client devices included in the list of trusted client devices and the average noise information.

Some example embodiments provide that the server further includes means for determining the updated set of global model weights by, calculating a sum of the encoded gradient information corresponding to the client devices included in the list of trusted client devices, determining average raw gradient information based on the sum of the encoded gradient information and the average noise information, and determining the updated set of global model weights based on the average raw gradient information.

Some example embodiments provide that transmissions to and from the server are encrypted.

At least one example embodiment is related to a client device.

In at least one example embodiment, the client device may include means for generating a first set of raw data, receiving an initial set of global model weights associated with a desired machine learning algorithm from a first server, generating raw gradient information based on the first set of raw data and the initial set of global model weights, generating encoded gradient information based on the raw gradient information and generated pseudo-random noise, transmitting the encoded gradient information to the first server, and receiving updated global model weights from the first server in response to the encoded gradient information.

Some example embodiments provide that the client device further includes means for, receiving pseudo-random noise parameter information from a second server, and generating the pseudo-random noise based on the pseudo-random noise parameter information.

Some example embodiments provide that the pseudo-random noise parameter information includes at least one of: a seed parameter, a distribution parameter, a mean parameter, a variance parameter, or any combinations thereof.

Some example embodiments provide that the pseudo-random noise parameter information is encrypted by the second server based on a shared encryption key of the client device.

Some example embodiments provide that the client device further includes means for generating the shared encryption key using at least one of Diffie-Hellman protocol, elliptic curve Diffie-Hellman protocol, Hess-Qian-Vanstone protocol, lattice-based key exchange, or any combinations thereof.

Some example embodiments provide that the client device further includes means for, performing stochastic gradient descent on the first set of raw data and the initial set of global model weights to generate the raw gradient information, and adding the pseudo-random noise to the raw gradient information to generate the encoded gradient information.

Some example embodiments provide that the client device further includes means for, generating updated raw gradient information based on the set of raw data and the updated set of global model weights, receiving new pseudo-random noise parameter information from a second server, generating new pseudo-random noise based on the new pseudo-random noise parameter information, generating updated encoded gradient information based on the updated raw gradient information and the new pseudo-random noise, and transmitting the updated encoded gradient information to the first server.

Some example embodiments provide that transmissions to and from the client device are encrypted.

Some example embodiments provide that the client device is a trusted execution environment (TEE) client device.

Some example embodiments provide that the client device is a non-TEE client device.

At least one example embodiment is related to a server.

In at least one example embodiment, the server may include means for receiving a first set of differences in encoded gradient information associated with a plurality of trusted execution environment (TEE) client devices from a first server, determining raw gradient distance between each of the plurality of TEE client devices based on the first set of differences, determining a list of core TEE client devices from the plurality of TEE client devices based on the determined raw gradient distance, the list of core TEE client devices including at least one core TEE client device from the plurality of TEE client devices, and transmitting the list of core TEE client devices to the first server.

Some example embodiments provide that the server further includes means for, receiving a second set of differences in encoded gradient information associated with each of a plurality of non-TEE client devices and each of the core TEE client devices in response to the transmission of the list of core TEE client devices, determining raw gradient distances between the core TEE client devices included in the list of core TEE client devices and each of the non-TEE client devices, and determining a set of trusted non-TEE client devices from the plurality of non-TEE client devices based on the raw gradient distances associated with each of the plurality of non-TEE client devices and a desired threshold gradient distance.

Some example embodiments provide that the server further includes means for, transmitting a list of trusted client devices to a second server, the list of trusted client devices including the plurality of TEE client devices and the set of trusted non-TEE client devices, receiving average noise information associated with the list of trusted client devices from the second server, and transmitting the list of trusted client devices and the average noise information to the first server.

Some example embodiments provide that the transmission of the list of trusted client devices and the average noise information enables the first server to determine updated set of global model weights based on the encoded gradient information corresponding to the client devices included in the list of trusted client devices and the average noise information.

## BRIEF DESCRIPTION OF THE DRAWINGS

The accompanying drawings, which are incorporated in and constitute a part of the specification, illustrate one or more example embodiments and, together with the description, explain these example embodiments. In the drawings:

FIG. 1 illustrates a hybrid FL system according to at least one example embodiment;

FIG. 2 illustrates a block diagram of an example computing device according to at least one example embodiment; and

FIG. 3 is an example transmission diagram illustrating a method of performing hybrid federated machine learning using TEE client devices and non-TEE client devices according to some example embodiments.

## DETAILED DESCRIPTION

Various example embodiments will now be described more fully with reference to the accompanying drawings in which some example embodiments are illustrated. However, specific structural and functional details disclosed herein are merely representative for purposes of describing the example embodiments. The example embodiments may, however, be embodied in many alternate forms and should not be construed as limited to only the example embodiments configured forth herein.

Various example embodiments are directed towards performing hybrid federated machine learning using trusted execution environment (TEE) client devices and non-TEE client devices.

While conventional FL methods allow for the construction of a global machine learning model and/or a deep learning model, a neural network model, etc. (hereinafter collectively referred to as a machine learning model), with improved data privacy and data security over conventional centralized machine learning methods, the conventional FL methods also may suffer from data privacy and data security issues. For example, while the local data sets stored on edge devices are not directly transmitted to a central server in conventional FL methods, security researchers have determined that the local data sets may be reconstructed and/or inferred from the updates to the global model through reconstruction attacks, inference attacks, model extraction attacks, etc. Further, the malicious parties may undermine the integrity of the FL machine learning model using poisoning attacks, Byzantine attacks, evasion attacks, etc., wherein the malicious parties upload malicious and/or erroneous data to the FL machine learning model, thereby disrupting and/or decreasing the accuracy of the machine learning model updates, etc.

Additionally, FL systems may include trusted execution environment (TEE) devices to improve the data security of the FL system. TEE devices are devices which include a processor supporting secure computing, e.g., creating a protected section within an application's address space, isolating code execution and memory access, etc., thereby ensuring that sensitive computations and data remain protected from unauthorized access or tampering. Examples of TEE devices include servers and/or client devices containing Intel SGX, ARM TrustZone, or AMD SME chips, but are not limited thereto. In FL, TEEs are commonly used to securely execute the aggregation process where participant updates are combined to create a global model, decreasing and/or preventing potential adversaries, including the server itself, from accessing the edge devices' raw data or models, and improving and/or ensuring data privacy. When used at the client end, TEEs enable secure execution of model training or inferencing, thereby reducing and/or preventing potential attacks.

Non-TEE client devices are client devices which do not contain processors which support secure computing and typically contain lower hardware resources than TEE client devices. While FL systems containing only TEE client devices may result in FL systems with improved data security and/or data privacy, hybrid FL systems provide advantages over homogenous TEE client device FL systems, by providing additional and/or diverse data sets to the FL training, reducing the cost of the FL system, etc.

Accordingly, there is a desire for FL methods with improved data privacy and/or data security over conventional FL methods, especially in hybrid environments containing a variety of client device types, such as trusted execution environment (TEE) client devices and non-TEE client devices.

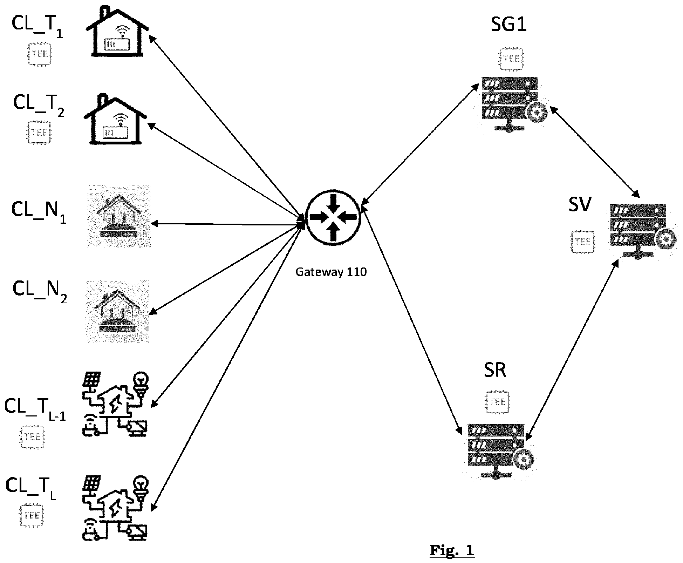

FIG. 1 illustrates a hybrid FL system according to at least one example embodiment. As illustrated in FIG. 1, a hybrid FL system includes a plurality of TEE client devices $CL\_T_1$ to $CL\_T_L$, and a plurality of non-TEE client devices $CL\_N_1$ to $CL\_N_2$, etc., a network gateway 110, and a plurality of servers, e.g., at least one gradient aggregation server SG1, at least one gradient verification server SV, and/or at least one random noise generating server SR, but the example embodiments are not limited thereto, and the example embodiments may include a greater or lesser number of constituent elements, such as a greater or lesser number of TEE client devices, a greater or lesser number of non-TEE client devices, a greater or lesser number of servers, and/or other networking devices, such as base stations, routers, access points, gateways, and so on.

The plurality of TEE client devices $CL\_T_1$ to $CL\_T_L$, and/or the plurality of non-TEE client devices $CL\_N_1$ to $CL\_N_2$ (hereinafter collectively referred to as the plurality of client devices) may connect to one or more of the plurality of servers, SG1, SV, and/or SR, via the network gateway 110, and may transmit local machine learning model updates to one of the plurality of servers, e.g., the gradient aggregation server SG1, but are not limited thereto. According to at least one example embodiment, the plurality of client devices may be connected over a wired network, such as a wired fiber optic network, a wired copper network, etc., and/or a wireless network, such as a cellular wireless access network (e.g., a 3G wireless access network, a 4G-Long Term Evolution (LTE) network, a 5G-New Radio (e.g., 5G) wireless network, a 6G network, a 7G network, a WiFi network), but the example embodiments are not limited thereto. Additionally, the client devices and the servers may be connected over a data network, such as the Internet, an intranet, a wide area network, and/or another type of network. Further, the data transmissions and/or other communications between the plurality of client devices, the gateway 110, and/or the plurality of servers may be encrypted using, e.g., secure sockets layer (SSL), transport layer security (TSL) using elliptic-curve Diffie-Hellman (ECDH), advanced encryption standard (AES), secure hash algorithm-2 (SHA2), etc., thereby further improving the data security of the hybrid FL system.

The plurality of client devices may be any one of, but are not limited to, a mobile device, a tablet, a laptop computer, a wearable device, an Internet of Things (IoT) device, a user equipment (UE) device, a mobile phone, a smartphone, a desktop computer, networking equipment, a medical device, a smart utility meter, a sensor, and/or any other type of stationary or portable device capable of collecting, sensing, and/or otherwise generating data for use in training a machine learning model. For example, as shown in FIG. 1, the client devices may be devices connected to a home network, such as a smartphone, tablet, IoT device, etc., routers and/or other networking equipment, and/or smart utility meters, etc., but are not limited thereto.

Moreover, TEE client devices are client devices which include at least a TEE processor, such as Intel SGX, ARM TrustZone, and/or AMD SME processors, etc., and/or support secure computing. Non-TEE client devices are client devices which do not include a TEE processor and/or do not support secure computing.

According to at least one example embodiment, one or more of the plurality of servers SG1, SV, and/or SR, may be TEE servers, thereby improving the data security and/or data privacy of the hybrid FL system, but the example embodiments are not limited thereto. While FIG. 1 depicts the SG1 server, the SV server, and the SR server as physically separate servers, the example embodiments are not limited thereto, and for example, two or more of the SG1 server, the SV server, and/or the SR server may execute on different TEE processors and/or TEE processor cores within the same server, may execute as different pods within the same cloud computing cluster, etc.

Additionally, the data security and/or data privacy of the hybrid FL system may be further increased and/or improved by having a plurality of servers performing separate roles in the FL training technique, and thereby restricting the access of the individual servers to, and/or prohibit the individual servers from being able to reconstruct or infer, etc., the local machine learning updates, e.g., the raw gradients, provided by the client devices. For example, the gradient aggregation server SG1 may be the only server which receives encoded versions of the local machine learning model updates, e.g., encoded gradients, which include pseudo-random noise added to the raw gradient data, from the plurality of client devices and generate updates of the global machine learning model and/or global model parameters based on the received encoded gradients. Further, the random noise generator server SR, may determine, calculate, and/or generate random noise parameters for use by each of the client devices to encode and/or otherwise obscure the raw gradients generated by the client devices, so that malicious parties may not reconstruct and/or infer the raw local data sets after intercepting the encoded gradients. Additionally, the verification server SV may identify malicious attacks, rogue client devices, and/or Byzantine client devices, etc., based on analysis of the distances between the gradients, thereby improving the data integrity and data security of the hybrid FL system.

Consequently, one or more of the example embodiments protect the privacy of the client devices by ensuring that only the encoded gradients (which have been obscured with pseudo-randomly generated noise) are transferred between the clients and central servers, and not the raw gradients and/or raw model weights. Moreover, because the encoded gradient verification and gradient aggregation operations are performed on TEE servers and are performed on encoded gradients and/or partially aggregated raw gradients. At no point in time are the raw gradients from any client device available to any of the central servers, SG1, SV, and/or SR, etc. Therefore, the example embodiments may increase protection against reconstruction attacks (e.g., data reconstruction attacks, etc.), which aim to obtain copies of the original training data in a FL system by analyzing predicted confidence values, parameters, and/or gradients.

Further, the integrity of the hybrid learning process is protected by the one or more example embodiments in that the verification operations of the encoded gradients sent by non-TEE client devices are verified and/or checked against encoded gradients from TEE client devices using a desired clustering algorithm, such as density-based spatial clustering of applications with noise (DBSCAN), hierarchical density-based spatial clustering of applications with noise (HDBSCAN), ordering points to identify the clustering structure (OPTICS), etc., in order to reduce and/or prevent Byzantine attacks from malicious client devices, etc. For example, the example embodiments may provide increased protection against Byzantine attacks, which can only come from non-TEE client devices, by employing a gradient filtering mechanism where the gradients from non-TEE client devices are verified against the gradients from TEE clients, and based on the verified similarity and/or closeness of the gradients, will the non-TEE client device gradients be trusted, etc.

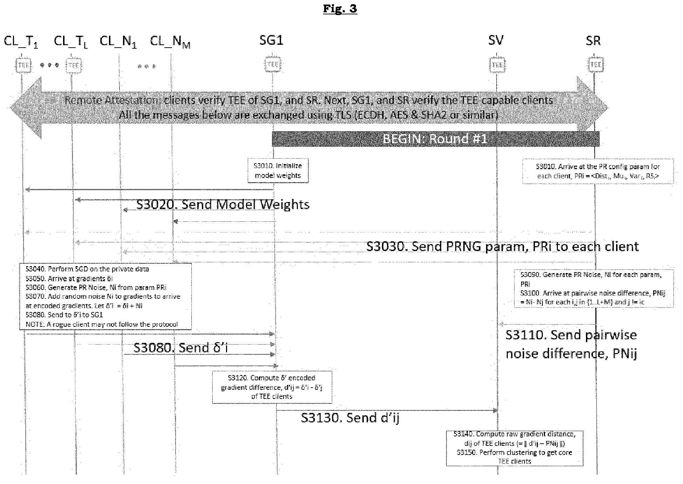

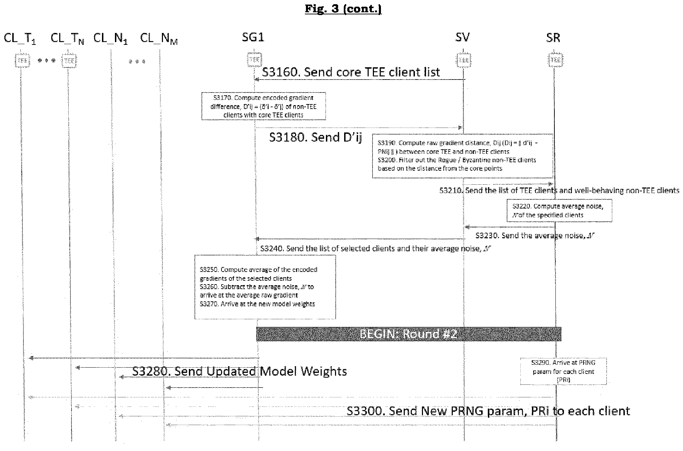

One or more of the example embodiments also provide the technical advantage of reducing the amount of computational processing and/or computational complexity required (and consequently reducing the hardware resource requirements) for client devices to encode the gradients before sending the encoded gradients to the central server(s) by using lightweight computation schemes in comparison to conventional techniques for trustworthy FL which rely on homomorphic encryption, blockchain, or verifiable computations, etc. The communication overhead requirements are also reduced in comparison to conventional techniques for trustworthy FL through the use of a lightweight communication scheme. The operations and roles of the plurality of servers and the operation of the client devices will be discussed in further detail in connection with FIG. 3 below.

According to at least one example embodiment, the hybrid FL system may be a smart energy management system for use with an electrical power grid, a utility company, a smart home energy management system, etc. The hybrid FL system may include a plurality of TEE client devices and non-TEE client devices, which are energy gateways (or home gateways) with computing capability that are connected to measurement units such as smart meters to monitor electricity consumption at residential homes, commercial office buildings, industrial factories, or the like, smart meters to monitor electricity generation at solar farms, wind farms, etc., as well as residential homes, commercial buildings, industrial factories, etc., with solar panel installations, etc. Further, the TEE and non-TEE client devices (e.g., home gateways/energy gateways) may also be connected to IoT devices (e.g., smart appliances, smart power outlets, smart electrical panels, smart thermostats, etc.), battery systems, etc., installed at residential homes, commercial buildings, industrial factories, etc., which may monitor and report energy usage as well.

The hybrid FL system may use the energy generation and/or energy consumption information collected by the plurality of client devices to train an energy load (e.g., consumption) and/or energy generation prediction machine learning model and/or an energy load disaggregation model in a secure and privacy-preserving manner. Further, the improved trained machine learning model may then perform grid load balancing by balancing energy consumption and generation by smoothing the power grids through more accurate energy load profiling and energy consumption and/or generation forecasting, and/or may enable highly dynamic energy trading, etc. For example, the hybrid FL system may be used to forecast energy demand patterns and/or energy production patterns at the individual household/commercial building/industrial factory, etc., level, thereby better identifying demand to allow for more efficient planning and/or routing of energy supply. Because the hybrid FL system collects information from a diverse set of client devices, including client devices which do not have TEE capabilities, the dataset used to train the energy load and/or energy generation prediction machine learning model is improved, thereby leading to a more effective machine learning model, and because the raw data collected by the client devices of individual homeowners, businesses, utility companies, etc., are not transmitted to a central server, there is increased data privacy which may lead to greater participation in the hybrid FL system, etc.

According to at least one example embodiment, the hybrid FL system may also be used for training healthcare related and/or medicine-related machine learning models. For example, the hybrid FL system may be used to train a collaborative disease diagnoses prediction machine learning model, wherein the hybrid FL system may include a plurality of TEE and non-TEE medical client devices located in one or more hospitals which are used to train a machine learning model for disease diagnosis. Each hospital may process their patient data locally, which improves and/or ensures patient privacy. Another healthcare related example embodiment may involve a hybrid FL system for remote patient monitoring using TEE and non-TEE smart devices, wearables and gateways, etc. The patients may use wearable smart devices and/or home medical equipment which may be monitored by cameras which are connected to network gateways and/or may be connected to a computer network via network gateways at the home. The gateways may be TEE devices, but are not limited thereto.

According to at least one example embodiment, the hybrid FL system may be used in telecommunication networks (e.g., wired and/or wireless networks, etc.). For example, the hybrid FL system may collect and train machine learning models on key performance indicator (KPI) data from base stations, user equipment (UE) devices radio access network (RAN) nodes, etc., or at a network level, to enhance network performance, improve and/or optimize resource allocation, and/or improve the overall quality of service. The hybrid FL system may collect and train machine learning models on KPI data across different regions, equipment, and/or devices of a single service provider, or across a plurality of service providers who collaborate to improve their network behavior, to arrive at the machine learning models. The TEE and non-TEE client devices may include fiber-optic network modems and/or routers, digital subscriber line (DSL) modems and/or routers, copper network modems and/or routers, wireless network modems and/or routers, wireless base stations, wireless access points, wireless user equipment, etc., which may participate in the hybrid FL system to generate and train on data for the machine learning models for fault diagnosis, etc.

For example, the hybrid FL machine learning models may be trained to perform anomaly detection and fault prediction for the telecommunication network, wherein the machine learning model is trained to identify abnormal patterns and/or potential faults in the network by analyzing KPI data, etc. The hybrid FL machine learning models may enable telecom operators to address network issues faster than conventional techniques, e.g., before network issues significantly impact customers' network performance, thereby decreasing and/or minimizing network downtime and/or service disruptions.

As another example, the hybrid FL machine learning models may be trained to perform network traffic load balancing and traffic optimization based on the KPI data, etc. Further, the hybrid FL machine learning models may be trained for energy efficiency optimization, by improving and/or optimizing energy consumption at base stations, RAN nodes, network servers, network equipment, and/or other network infrastructure. The KPI data may be used to model the energy consumption patterns of the desired network equipment, and the hybrid FL system may collaboratively analyze the network energy consumption information to identify energy-savings opportunities, etc. The machine learning models may also suggest optimizations to the telecom operator, such as adjusting transmission power levels or implementing sleep modes during low-network traffic periods, thereby contributing to overall energy efficiency, etc.

While certain components of a hybrid FL system are illustrated in FIG. 1, the example embodiments are not limited thereto, and the hybrid FL system may include components other than those illustrated in FIG. 1, which are desired, necessary, and/or beneficial for operation of the underlying networks within the hybrid FL system, such as access points, switches, routers, nodes, servers, gateways, and other components, units, or devices.

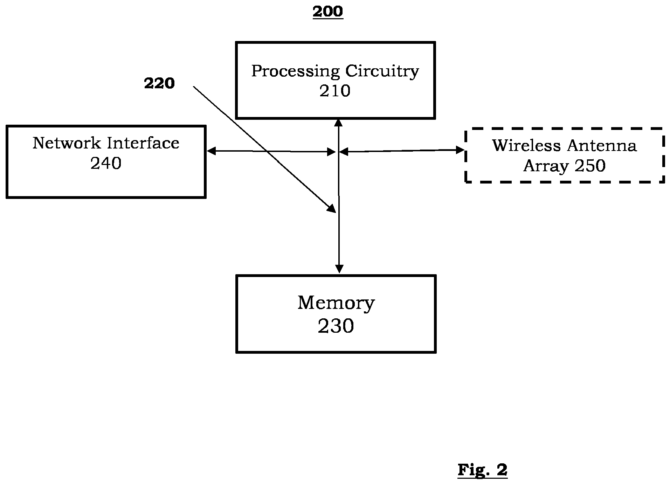

FIG. 2 illustrates a block diagram of an example computing device according to at least one example embodiment. The computing device of FIG. 2 may correspond to the one or more of the plurality of TEE devices, one or more of the plurality of non-TEE devices, and/or one or more of the plurality of servers in FIG. 1, but the example embodiments are not limited thereto.

Referring to FIG. 2, a computing device 200 may include processing circuitry, such as processing circuitry 210, at least one communication bus 220, a memory 230, at least one network interface 240, and/or at least one wireless antenna array 250, but the example embodiments are not limited thereto. For example, the network interface 240 and the wireless antenna array 250 may be combined into a single network interface, or the computing device 200 may include a plurality of wireless antenna arrays, a plurality of network interfaces, and/or any combinations thereof. The memory 230 may include various special purpose program code including computer executable instructions which may cause the computing device 200 to perform the one or more of the methods of the example embodiments.

In at least one example embodiment, the processing circuitry 210 may include at least one processor (and/or processor cores, distributed processors, and networked processors), which may be configured to control one or more elements of the computing device 200, and thereby cause the computing device 200 to perform various operations. According to at least one example embodiment, the processing circuitry 210 may be TEE processing circuitry and support secure computing operations and/or functionality. The processing circuitry 210 is configured to execute processes by retrieving program code (e.g., computer readable instructions) and data from the memory 230 to process them, thereby executing special purpose control and functions of the entire computing device 200. Once the special purpose program instructions are loaded into the processing circuitry 210, the processing circuitry 210 executes the special purpose program instructions, thereby transforming the processing circuitry 210 into a special purpose processor.

In at least one example embodiment, the memory 230 may be a non-transitory computer-readable storage medium and may include a random access memory (RAM), a read only memory (ROM), and/or a non-volatile mass storage device, such as a disk drive, and/or a solid state drive. Stored in the memory 230 is program code (e.g., computer readable instructions) related to operating the computing device 200, such as the methods discussed in connection with FIG. 3, the at least one network interface 240, and/or at least one wireless antenna array 250. Such software elements may be loaded from a non-transitory computer-readable storage medium independent of the memory 230, using a drive mechanism (not illustrated) connected to the computing device 200, via the at least one network interface 240, and/or at least one wireless antenna array 250.

In at least one example embodiment, the communication bus 220 may enable communication and data transmission to be performed between elements of the computing device 200. The bus 220 may be implemented using a high-speed serial bus, a parallel bus, and/or any other appropriate communication technology. According to at least one example embodiment, the computing device 200 may include a plurality of communication buses (not illustrated), such as an address bus, a data bus, and so on.

According to some example embodiments, the computing device 200 may include a greater or lesser number of constituent components, and for example, the computing device 200 may also include at least one sensor for obtaining, collecting, and/or sensing data for use in training a machine learning model (not illustrated), at least one energy harvesting device (not illustrated), such as radio frequency (RF) harvesting circuitry (e.g., backscattering circuitry), one or more solar cells/panels, etc., and/or at least one energy storage device (not illustrated), such as at least one battery, at least one capacitor, and so on.

The at least one wireless antenna array 250 may include an associated array of radio units (not illustrated) and may be used to transmit the wireless signals in accordance with a radio access technology, such as 4G LTE wireless signals, 5G NR wireless signals, to one or more user equipment (UE) devices and/or radio access network (RAN) nodes, etc. According to some example embodiments, the wireless antenna array 250 may be a single antenna, or may be a plurality of antennas. For example, the wireless antenna array 250 may be configured as a grid of beams (GoB) which transmits a plurality of beams in different directions, angles, frequencies, and/or with different delays.

The computing device 200 may communicate with a core network (e.g., backend network, backhaul network, backbone network, data network, or another network) of the wireless communication network and/or a data network via the network interface 240. The network interface 240 may be a wired and/or wireless network interface and may enable the computing device 200 to communicate and/or transmit data to and from to network devices on the backend network, such as a core network gateway (not illustrated), a data network (not illustrated), such as the Internet, intranets, wide area networks, telephone networks, or VoIP networks.

While FIG. 2 depicts an example embodiment of a computing device 200 which may operate as a TEE client device, a non-TEE device, and/or a server, the example embodiments are not limited thereto, and may include additional and/or alternative architectures that may be suitable for the purposes demonstrated.

FIG. 3 illustrates an example transmission diagram illustrating a method of performing hybrid federated machine learning using TEE client devices and non-TEE client devices according to some example embodiments.

According to at least one example embodiment, prior to the commencement of a first round of training a FL machine learning model, each of the plurality of client devices, e.g., TEE client devices $CL\_T_1$ to $CL\_T_L$ and non-TEE client devices $CL\_N_1$ and $CL\_N_M$, may establish a secure connection (e.g., a secure network connection, an inter-process communication (IPC) mechanism, etc.) with an enclave within a TEE of one or more of the central servers, gradient aggregation server SG1, verification server SV, and/or random noise generator server SR, etc. After the secure communication is established, each of the client devices may perform an attestation operation to verify the integrity and authenticity of the enclave to determine whether the enclave has been tampered with (e.g., modified, hacked, etc.). For example, the client device may initiate the attestation process by requesting a quote from the enclave, and in response, the enclave generates a quote that includes cryptographic evidence of its integrity which is signed by the enclave's private key. The client devices may then verify the attestation by sending the quote to an attestation service, such as Intel Attestation Service, etc., for verification. If the attestation is successful, the client device and the enclave establish a secure communication channel using protocols such as secure sockets layer (SSL), transport layer security (TLS) using ECDH, AES, SHA2, etc. The secure communication channel may ensure and/or improve confidentiality and/or integrity of the data exchanged between the client and the enclave. Additionally, one or more of the central servers, e.g., the gradient aggregation server SG1, verification server SV, and/or random noise generator server SR, etc., may perform the attestation operation for each of the TEE-client devices as well.

In operation S3010, the first round of training a FL machine learning model may begin with a gradient aggregation server SG1 initializing machine learning model weights, e.g., generating initial set of model weights, etc., for a desired machine learning algorithm. Additionally, a random noise generator server SR may determine pseudo-random (PR) configuration parameters for use in generating pseudo-random noise for use by the plurality of client devices and the plurality of servers, as well as use in gradient verification. The PR configuration parameters may include a tuple of distribution, $Dist_i$, a mean, $Mu_i$, a variance, $Var_i$, and/or seed parameter information, $RS_i$, etc., for generating random noise by each of the client devices, but the example embodiments are not limited thereto. For example, the PR configuration parameters may be represented as $PR_i = <Dist_i, Mu_i, Var_i, RS_i>$. According to some example embodiments, the random noise generator server SR may generate different PR configuration parameters for each client device, but the example embodiments are not limited thereto. Further, according to some example embodiments, the random noise generator server SR may encrypt the PR configuration parameter information using an encryption key shared with the desired client device (e.g., a shared encryption key, a shared private key, etc.) to further improve data security. For example, the shared encryption key may be generated by the relevant client device using a desired encryption algorithm, e.g., a Diffie-Hellman protocol, elliptic curve Diffie-Hellman (ECDH) protocol, Hess-Qian-Vanstone (HQV) protocol, lattice-based key exchange, etc., and transmitted to the random noise generator server SR, etc., but the example embodiments are not limited thereto.

In operation S3020, the gradient aggregation server SG1 may transmit the initial model weights to the plurality of client devices, e.g., TEE client devices $CL\_T_1$ to $CL\_T_L$, and the plurality of non-TEE client devices, e.g., non-TEE client devices $CL\_N_1$ to $CL\_N_M$, etc. According to some example embodiments, communication between the gradient aggregation server SG1 and the plurality of client devices may be encrypted, e.g., using TLS for non-TEE client devices and remote attestation (RA)-TLS for TEE client devices, but the example embodiments are not limited thereto.

Similarly, in operation S3030, the random noise generator server SR may transmit the PR configuration parameters $PR_i$ to each client device. According to some example embodiments, communication between the random noise generator server SR and the plurality of client devices may also be encrypted using TLS, RA-TLS, etc.

In operation S3040, each of the client devices may perform at least one client-side mathematical optimization operation, such as stochastic gradient descent (SGD), Adagrad, etc., on the raw data collected, obtained, sensed, and/or generated by the respective client device, but is not limited thereto. The optimization operation may involve one or multiple local steps. Each local step executes a forward pass of the data through the machine learning model (and/or neural network, artificial intelligence network, etc.), computes the corresponding loss value, performs backpropagation to derive the raw gradient values for that local step, and updates the local model with these values. Ultimately, the raw gradients, $\delta i$, where $i \in [1, L+M]$ for the current training round are computed as the difference between the latest local model weight and the initial model weight at the beginning of the training round. In operation S3050, the client devices may generate raw gradients $\delta i$, where $i \in [1, L+M]$ based on the results of the client-side mathematical optimization operation calculations. In operation S3060, each client device may generate random noise $Ni$ based on the pseudo random noise configuration parameter $PR_i$. In operation S3070, each of the client devices may generate encoded gradients $\delta'i$ by adding the random noise $Ni$ to the raw gradient $\delta i$ (e.g., $\delta'i = \delta i + Ni$).

In operation S3090, similar to operation S3060, the random number generator server SR may generate the same pseudo-random noise generated by each of the client devices using the PR configuration parameters $PR_i$. Additionally, in operation S3100, the random number generator server SR may determine pairwise noise difference for different pair combinations of the generated random noise, e.g., $PNij = Ni - Nj$ for each $i, j \in \{1..L+M\}$ and $j != i$. In operation S3110, the random number generator server SR may transmit the pairwise noise differences $PNij$ to the verification server SV.

In operation S3120, for each TEE client in the plurality of client devices (e.g., $CL\_T_i$ $i \in [1,L]$), the gradient aggregation server SG1 may determine encoded gradient differences $d'ij$ of the particular TEE client device with all of the other TEE client devices, $CL\_T_j$ $j \in [1,L]$ and $j != i$, e.g., $d'ij = \delta'i - \delta'j$. In operation S3130, the gradient aggregation server SG1 may transmit the encoded gradient differences $d'ij$ to the verification server SV.

In operation S3140, the verification server SV may calculate the raw gradient distance between the TEE clients. For example, the verification server SV may subtract the pairwise noise $PNij$ received from the random noise generator server SR from the encoded gradient difference $d'ij$, and then take the L2 norm of the result, as shown in the equations below.

$$dij = \| d'ij - PNij \| = \| \delta i' - \delta j' - (Ni - Nj) \|$$

$$dij = \| \delta i + Ni - \delta j - Nj - Ni + Nj \|$$

$$dij = \| \delta i - \delta j \|$$

In operation S3150, the verification server SV may perform clustering using a desired clustering algorithm, such as DBSCAN, HDBSCAN, OPTICS, etc., to determine a list of core TEE client devices from the plurality of TEE client devices based on the raw gradient distance information. For example, the verification server SV may select the core TEE client devices by comparing the distances between the raw gradients one or more desired trust conditions for client devices, such as a maximum distance between raw gradients, a minimum distance between raw gradients, a desired number of core TEE client devices, etc., but the example embodiments are not limited thereto.

In operation S3160, the verification server SV may transmit the list of core TEE client devices to the gradient aggregation server SG1. In operation S3170, for each of the non-TEE client devices CL_Ni, i E [1,M], the gradient aggregation server SG1 may calculate the encoded gradient difference D'ij with the core TEE client devices, CL_Tj, j ∈ { core_TEE clients }.

In operation S3180, the gradient aggregation server SG1 may transmit the encoded gradient difference information D'ij for the plurality of non-TEE devices to the verification server SV. In operation S3190, similar to operation S3140, the verification server SV may calculate the raw gradient distance Dij between the gradients of the core TEE clients and the non-TEE clients, dij = $\| d'ij - PNij \| = \| \delta i' - \delta j' - (Ni - Nj) \| = \| \delta_i + N_i - \delta_j - N_j - N_i + N_j \|$; which becomes dij = $\| \delta i - \delta j \|$.

In operation S3200, the verification server SV may identify trusted non-TEE client devices based on the raw gradient distance information between the gradients of the core TEE client devices and the non-TEE client devices. More specifically, the verification server SV may compare the raw gradient distance information for each non-TEE client device to the desired trust conditions, e.g., the maximum distance between raw gradients, the minimum distance between raw gradients, etc., and if the raw gradient distance between the relevant non-TEE client device and at least one core TEE client device satisfies the desired trust conditions, the verification sever SV may add the relevant non-TEE client device to a list of trusted non-TEE client devices. Conversely, the verification server SV may determine that the non-TEE client device is a malicious, rogue, and/or Byzantine client device if the raw gradient distance between the relevant non-TEE client device and all of the core TEE client devices fail the desired trust conditions. According to some example embodiments, the non-TEE client devices included in the malicious client device list may be prohibited from further participation in the FL training method, e.g., the plurality of servers block further communication with the banned non-TEE client devices, etc.

In operation S3210, the verification server SV may transmit the list of selected client devices (e.g., the TEE clients and trusted non-TEE clients) to the random number generator server SR. In operation S3220, the random number generator server SR may compute the average noise N (e.g., the mean of the noise, etc.) of the TEE client devices and the trusted non-TEE client devices. According to at least one example embodiment, the average noise N is a vector that has the same number of elements as the gradient vectors $\delta i$. In operation

S3230, the random number generator server SR transmits the calculated average noise N to the verification server SV. In operation S3240, the verification server may transmit the list of selected client devices and their corresponding average noise *N* to the gradient aggregation server SG1.

In operation S3250, the gradient aggregation server SG1 may determine the average of the of the encoded gradients of the selected client devices, e.g.,

$$\delta 1 = \frac{1}{L}\sum_{i=1}^{L} \delta_i' + \frac{1}{N_C}\sum_{k \in C} \delta_k'$$

, wherein C = the set of selected client devices and $N_c$ is the number of selected client devices.

In operation S3260, the gradient aggregation server SG1 may determine the average of the raw gradients for the selected client devices for this round of the FL training method by subtracting the average noise N from the average encoded gradients, e.g., $\delta = \delta 1 - N.$

In operation S3270, the gradient aggregation server SG1 may determine new weight coefficients (e.g., calculate updated model weights, etc.) by applying the average raw gradients to the initial model weights.

In operation S3280, the next round of the FL machine learning algorithm begins using the updated model weights calculated in operation S3270, and operations S3010 to S3270 may be repeated until a desired training termination condition is satisfied. According to some example embodiments, the desired training termination condition may be a desired number of training rounds completed, the accuracy results on the validation split of the local datasets stored on a desired percentage of client devices is greater than a target value, e.g., 99% accuracy, but not limited thereto, and/or the accuracy results of the global model on a small representative test dataset at the gradient aggregation server SG1 satisfies a desired target value, etc., but the example embodiments are not limited thereto.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

It will be understood that, although the terms first, second, and so on may be used herein to describe various elements, these elements should not be limited by these terms. These terms are only used to distinguish one element from another. For example, a first element could be termed a second element, and, similarly, a second element could be termed a first element, without departing from the scope of the example embodiments. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent").

The terminology used herein is for the purpose of describing particular embodiments only and is not intended to be limiting of the example embodiments. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures illustrated in succession may in fact be executed substantially concurrently or may sometimes be executed in the reverse order, depending upon the functionality/acts involved.

Specific details are provided in the following description to provide a thorough understanding of the example embodiments. However, it will be understood by one of ordinary skill in the art that example embodiments may be practiced without these specific details. For example, systems may be illustrated in block diagrams in order not to obscure the example embodiments in unnecessary detail. In other instances, well-known processes, structures and techniques may be illustrated without unnecessary detail in order to avoid obscuring example embodiments.

Also, it is noted that example embodiments may be described as a process depicted as a flowchart, a flow diagram, a data flow diagram, a structure diagram, or a block diagram. Although a flowchart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, a function, a procedure, a subroutine, and/or a subprogram. When a process corresponds to a function, its termination may correspond to a return of the function to the calling function or the main function.

Moreover, as disclosed herein, the term "memory" may represent one or more devices for storing data, including random access memory (RAM), magnetic RAM, core memory, and/or other machine readable mediums for storing information. The term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" may include, but is not limited to, portable or fixed storage devices, optical storage devices, wireless channels, and various other mediums capable of storing, containing or carrying instruction(s) and/or data.

Furthermore, example embodiments may be implemented by hardware circuitry and/or software, firmware, middleware, microcode, and/or hardware description languages, in combination with hardware (e.g., software executed by hardware). When implemented in software, firmware, middleware or microcode, the program code or code segments to perform the desired tasks may be stored in a machine or computer readable medium such as a non-transitory computer storage medium, and loaded onto one or more processors to perform the desired tasks.

A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, and/or data, may be passed, forwarded, or transmitted via any suitable means including memory sharing, message passing, token passing, and/or network transmission.

As used in this application, the term "circuitry" and/or "hardware circuitry" may refer to one or more or all of the following: (a) hardware-only circuit implementation (such as implementations in only analog and/or digital circuitry); (b) combinations of hardware circuits and software, such as (as applicable): (i) a combination of analog and/or digital hardware circuit(s) with software/firmware, and (ii) any portions of hardware processor(s) with software (including digital signal processor(s)), software, and memory(ies) that work together to cause an apparatus, such as a mobile phone or server, to perform various functions); and (c) hardware circuit(s) and/or processor(s), such as microprocessor(s) or a portion of a microprocessor(s), that requires software (e.g., firmware) for operation, but the software may not be present when it is not needed for operation. For example, the circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, or an application-specific integrated circuit (ASIC).

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

## Claims

1. A server (SG1) comprising:

   means for determining an initial set of global model weights associated with a desired machine learning algorithm,
   means for transmitting the initial set of global model weights to a plurality of client devices (CL_T$_1$, CL_Ni), the plurality of client devices including a plurality of trusted execution environment, TEE, client devices and a plurality of non-TEE client devices, the initial set of global model weights enabling each of the plurality of client devices to generate encoded gradient information based on data collected by each respective client device and pseudo-random noise generated by the respective client device,
   means for receiving the encoded gradient information from each of the plurality of client devices,
   means for determining a first set of differences in the encoded gradient information received from the plurality of TEE client devices;
   means for transmitting the first set of differences to a verification server (SV), and
   means for determining an updated set global model weights based on the encoded gradient information.

2. The server of claim 1, further comprising

   means for receiving a list of core TEE client devices from the verification server, the list of core TEE client devices selected from the plurality of TEE client devices by the verification server based on the first set of differences;
   means for determining a second set of differences in the encoded gradient information received from each of the plurality of non-TEE client devices and each of the core TEE client devices; and
   means for transmitting the second set of differences to the verification server.

3. The server of any one of claims 1 to 2, further comprising:

   means for receiving a list of trusted client devices and average noise information from the verification server, the list of trusted client devices selected from the plurality of TEE client devices and the plurality of non-TEE client devices by the verification server based on the second set of differences, and the average noise information associated with the list of trusted client devices; and
   means for determining the updated set of global model weights based on the encoded gradient information corresponding to the client devices included in the list of trusted client devices and the average noise information.

4. The server of any one of claims 1 to 3, wherein means for determining the updated set of global model weights comprise:

   means for calculating a sum of the encoded gradient information corresponding to the client devices included in the list of trusted client devices;
   means for determining average raw gradient information based on the sum of the encoded gradient information and the average noise information; and
   means for determining the updated set of global model weights based on the average raw gradient information.

5. A client device (CL_T$_1$, CL_Ni) comprising:

   means for generating a first set of raw data;
   means for receiving an initial set of global model weights associated with a desired machine learning algorithm from a first server;
   means for generating raw gradient information based on the first set of raw data and the initial set of global model weights;
   means for generating encoded gradient information based on the raw gradient information and generated pseudo-random noise;
   means for transmitting the encoded gradient information to the first server; and
   means for receive updated global model weights from the first server in response to the encoded gradient information.

6. The client device of claim 5, further comprising:

   means for receiving pseudo-random noise parameter information from a second server (SR); and
   means for generating the pseudo-random noise based on the pseudo-random noise parameter information.

7. The client device of any one of claims 5 to 6, wherein the pseudo-random noise parameter information includes at least one of:
a seed parameter, a distribution parameter, a mean parameter, a variance parameter, or any combinations thereof.

8. The client device of any one of claims 5 to 7, further comprising:

means for performing stochastic gradient descent on the first set of raw data and the initial set of global model weights to generate the raw gradient information; and
means for adding the pseudo-random noise to the raw gradient information to generate the encoded gradient information.

9. The client device of any one of claims 5 to 8, further comprising:

means for generating updated raw gradient information based on the set of raw data and the updated set of global model weights;
means for receiving new pseudo-random noise parameter information from a second server;
means for generating new pseudo-random noise based on the new pseudo-random noise parameter information;
means for generating updated encoded gradient information based on the updated raw gradient information and the new pseudo-random noise; and
means for transmitting the updated encoded gradient information to the first server.

10. The client device of any one of claims 5 to 9, wherein transmissions to and from the client device are encrypted.

11. A server (SV) comprising:

means for receiving a first set of differences in encoded gradient information associated with a plurality of trusted execution environment (TEE) client devices from a first server (SG1),
means for determining raw gradient distance between each of the plurality of TEE client devices based on the first set of differences,
means for determine a list of core TEE client devices from the plurality of TEE client devices based on the determined raw gradient distance, the list of core TEE client devices including at least one core TEE client device from the plurality of TEE client devices, and

means for transmitting the list of core TEE client devices to the first server.

12. The server of claim 11, further comprising:

means for receiving a second set of differences in encoded gradient information associated with each of a plurality of non-TEE client devices and each of the core TEE client devices in response to the transmission of the list of core TEE client devices;
means for determining raw gradient distances between the core TEE client devices included in the list of core TEE client devices and each of the non-TEE client devices; and
means for determining a set of trusted non-TEE client devices from the plurality of non-TEE client devices based on the raw gradient distances associated with each of the plurality of non-TEE client devices and a desired threshold gradient distance.

13. The server of any one of claims 11 to 12, further comprising:

means for transmitting a list of trusted client devices to a second server, the list of trusted client devices including the plurality of TEE client devices and the set of trusted non-TEE client devices;
means for receive average noise information associated with the list of trusted client devices from the second server; and
means for transmit the list of trusted client devices and the average noise information to the first server.

14. The server of any one of claims 11 to 13, wherein the transmission of the list of trusted client devices and the average noise information enables the first server to:
determine updated set of global model weights based on the encoded gradient information corresponding to the client devices included in the list of trusted client devices and the average noise information.

$CL\_T_1$
TEE

$CL\_T_2$
TEE

$CL\_N_1$

$CL\_N_2$

$CL\_T_{L-1}$
TEE

$CL\_T_L$
TEE

Gateway 110

SG1
TEE

SV
TEE

SR
TEE

**Fig. 1**

**200**

Processing Circuitry
210

**220**

Network Interface
240

Wireless Antenna
Array 250

Memory
230

**Fig. 2**

**Fig. 3**

CL_T$_1$  CL_T$_L$  CL_N$_1$  CL_N$_M$   SG1   SV   SR

Remote Attestation: clients verify TEE of SG1, and SR. Next, SG1, and SR verify the TEE capable clients
All the messages below are exchanged using TLS (ECDH, AES & SHA2 or similar)

BEGIN: Round #1

S3010. Initialize model weights

S3010. Arrive at the PR config param for each client, PRi = <Dist$_i$, Mu$_i$, Var$_i$, RS$_i$>

S3020. Send Model Weights

S3030. Send PRNG param, PRi to each client

S3040. Perform SGD on the private data
S3050. Arrive at gradients δi
S3060. Generate PR Noise, Ni from param PRi
S3070. Add random noise Ni to gradients to arrive at encoded gradients. Let δ'i = δi + Ni
S3080. Send to δ'i to SG1
NOTE: A rogue client may not follow the protocol

S3090. Generate PR Noise, Ni for each param, PRi
S3100. Arrive at pairwise noise difference, PNij = Ni - Nj for each i,j in {1..L+M} and j != ic

S3080. Send δ'i

S3110. Send pairwise noise difference, PNij

S3120. Compute δ' encoded gradient difference, d'ij = δ'i - δ'j of TEE clients

S3130. Send d'ij

S3140. Compute raw gradient distance, dij of TEE clients (= ‖ d'ij – PNij ‖)
S3150. Perform clustering to get core TEE clients

17

**Fig. 3 (cont.)**

CL_T$_1$    CL_T$_N$   CL_N$_1$   CL_N$_M$         SG1                                          SV            SR

S3160. Send core TEE client list

> S3170. Compute encoded gradient
> difference, D'ij = {δ'i - δ'j}; of non-TEE
> clients with core TEE clients

S3180. Send D'ij

> S3190. Compute raw gradient distance, Dij {Dij = ‖ d'ij –
> PNij ‖ ) between core TEE and non-TEE clients
> S3200. Filter out the Rogue / Byzantine non-TEE clients
> based on the distance from the core points

S3210. Send the list of TEE clients and well-behaving non-TEE clients

> S3220. Compute average noise,
> 𝒩 of the specified clients

S3230. Send the average noise, 𝒩

S3240. Send the list of selected clients and their average noise, 𝒩

> S3250. Compute average of the encoded
> gradients of the selected clients
> S3260. Subtract the average noise, 𝒩 to
> arrive at the average raw gradient
> S3270. Arrive at the new model weights

**BEGIN: Round #2**

> S3290. Arrive at PRNG
> param for each client
> (PRi)

S3280. Send Updated Model Weights

S3300. Send New PRNG param, PRi to each client

18

# EUROPEAN SEARCH REPORT

**Application Number**

EP 24 21 4756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KATO FUMIYUKI ET AL: "Olive: Oblivious Federated Learning on Trusted Execution Environment against the Risk of Sparsification", PROCEEDINGS OF THE VLDB ENDOWMENT, [Online] 19 June 2023 (2023-06-19), pages 1-20, XP093266505, New York, NY ISSN: 2150-8097, DOI: 10.14778/3603581.3603583 Retrieved from the Internet: URL:https://arxiv.org/pdf/2202.07165> [retrieved on 2025-04-04] * abstract * * page 1, left-hand column, line 1 - page 12, right-hand column, last line * * page 16, left-hand column, line 1 - page 20, right-hand column, last line * | 1-14 | INV. G06N3/098 G06N3/063 G06N3/084 |
| A | CAO XIAOYU ET AL: "FLTrust: Byzantine-robust Federated Learning via Trust Bootstrapping", PROCEEDINGS 2021 NETWORK AND DISTRIBUTED SYSTEM SECURITY SYMPOSIUM, [Online] 21 February 2021 (2021-02-21), pages 1-18, XP093266516, Reston, VA DOI: 10.14722/ndss.2021.24434 ISBN: 978-1-891562-66-2 Retrieved from the Internet: URL:https://www.ndss-symposium.org/wp-content/uploads/ndss2021_6C-2_24434_paper.pdf> [retrieved on 2025-04-04] * abstract * * page 1, left-hand column, line 1 - page 15, left-hand column, last line * | 1-14 | TECHNICAL FIELDS SEARCHED (IPC)<br><br>G06N |

The present search report has been drawn up for all claims

| Place of search | Date of completion of the search | Examiner |
|---|---|---|
| The Hague | 4 April 2025 | Totir, Felix |